# EUROPEAN PATENT SPECIFICATION

(11) **EP 0 848 900 B1**
(45) Date of publication and mention of the grant of the patent: **10.04.2002**
(21) Application number: 97203629.7
(22) Date of filing: 26.01.1995
(51) Int. Cl.: A01D 78/10

(54) **A tedding machine**
Heuwendemaschine
Machine de fenaison

(30) Priority: 28.01.1994 NL 9400133
(43) Date of publication of application: 24.06.1998
(62) Divisional of application: 95200181.6
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 165 638
- EP-A- 0 391 093
- EP-A- 0 664 948
- EP-A- 0 772 962
- EP-A- 0 806 133
- WO-A-97/46076
- DE-U- 9 111 676

## Description

The invention relates to a tedding machine for tedding crop lying on the ground comprising a frame equipped with around upwardly extending axes rotatably drivable processing devices having tines, said tedding machine having a frame comprising a central frame part to be coupled to a tractor, the processing devices being arranged in two groups, the processing members of each group being symmetrically disposed with respect to a centre line M in the direction of movement of the machine.

From the European patent application 0 165 638 a machine of this kind is known having processing devices in the form of rake wheels, said groups of rake wheels are pivoting about horizontal axes.

The aim of the invention is to construct a tedding device which can be used with a large number of processing devices, which can easily been brought in a transport position.

According to the invention each group is pivotally mounted with respect to the central frame part about a first axis extending in the direction of travel A of the machine and each group of processing devices has also a second pivot axis extending upwardly with respect to the remainder of the machine and each of said groups being pivotable through 90° about said pivot axis in a forward direction so as to place the processing devices of each group in a row on a line in the direction of travel A and wherein for each group the first axis and the upwardly extending second axis are situated above the same processing device.

The invention will now be further explained with reference to the accompanying drawings, in which:
Figure 1 shows a top plan view of a machine according to the invention in a condition where it is coupled to the front and rear hitch mechanism of a tractor;
Figure 2 is a partial view according to arrow II in Figure 1;
Figure 3 is a partial front view of the machine as represented in Figure 1, but here it is in the transport position;
Figure 4 is a top plan view of the machine in a condition where it is coupled to a tractor and in the preferred transport position according to Figure 3;
Figure 5 is a plan view of an alternative embodiment of the invention where the machine is in an operating position, with the transport position being represented by dashed lines;
Figure 6 is a front view according to arrow VI in Figure 5 and represents an operating position of the machine in accordance with Figure 5;
Figure 7 represents the transport position of the machine in a front view according to arrow VI in Figure 5.

Corresponding parts in the drawings are marked by the same reference numbers. Moreover, the invention is by no means limited to the embodiments depicted and described here; these are only intended for illustration of the inventive idea.

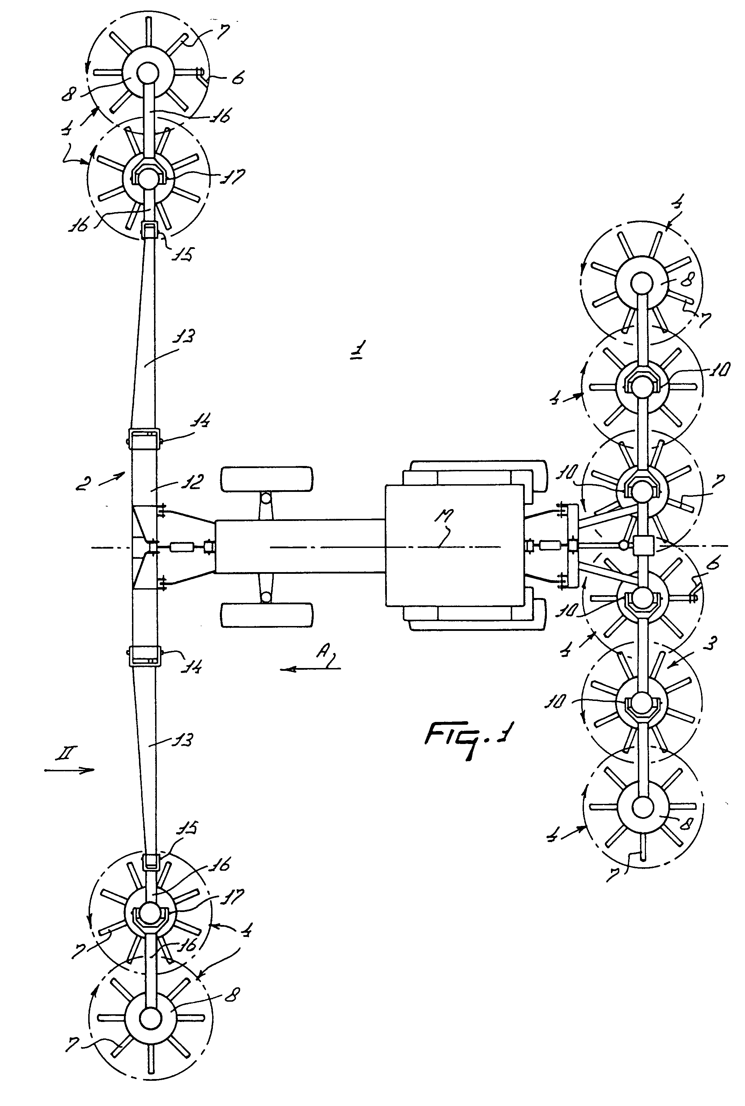

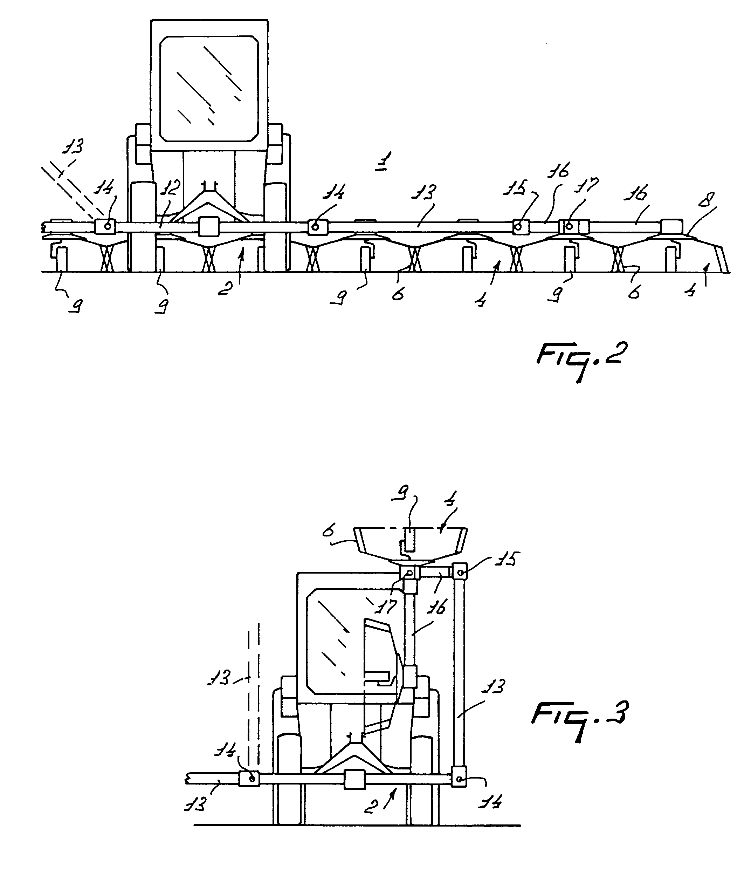

Figure 1 shows a haymaking machine 1 which is suitable for crop-tedding and which comprises a first and a second, i.e. a front and a rear frame 2, 3. The second frame 3 comprises six known per se processing devices 4, each of which operates pairedly in conjunction with a processing device 4 disposed in an adjacent position. Each of the processing devices 4 is rotatable on a drivable, rotary shaft which is substantially extending upwards and is supported by bearings in the frame 2, 3. Each processing device 4 is provided with processing elements 6, such as tines, which make contact with the crop to be tedded. In the preferred embodiment represented in the drawings, the processing devices 4 comprise eight arms 7 to bear such processing elements 6. These arms 7 are supported and kept in position with respect to each other by a cap 8 mounted on the said rotary shaft and covering the central or centre-sided end of an arm 7. Each processing device 4 is supported with respect to the ground by means of a supporting element 9, preferably a wheel, for instance, such as is depicted in Figure 2. Moreover, for the purpose of optimum adjustment to the ground, each of the processing devices 4, though with the exception of the two central ones, is movable on a swivel shaft 10 oriented substantially in the direction of travel A and disposed on the respective processing device's side being the closer to the machine centre line M when mounted in the frame 2, 3. According to the invention, this mounting position is preferably over the upwards extending rotary shaft of a neighbouring processing device 4. The rear frame 3 of the machine is connected to the rear hitch of the tractor through a known per se hook-up trestle. Viewed from above, the frame 3 is connected to the three-point trestle through a trapezial hinge-construction in such a way that the distance between the rear pivots is at a maximum. Such an arrangement ensures that the machine follows the tractor in a stable manner.

The front frame 2 of the machine 1 comprises a central frame part 12 which is in a known manner coupled to the front three-point hitch of the tractor through a three-point trestle provided on this part 12. At a distance corresponding with the largest contour circle of a processing device 4, as measured from the vertical plane imaginable through the centre line M, an intermediate frame part 13 belonging to the front frame 2 is mounted pivotably on a swivel shaft 14 oriented in the direction of travel A. On the end of an intermediate frame part 13, a further frame part 16 provided with a group of one pair of processing devices 4 is mounted pivotably on a swivel shaft 15 being in the direction of travel. Here, the swivel shaft 15 is positioned near, but preferably within the largest contour circle of the relevant processing device 4 of a mentioned pair. The outer one of a mentioned pair of processing devices is, with respect to the inner processing device 4, capable of being moved about a swivel shaft 17 which extends in the direction of travel A and connects two parts of the further frame part 16. Just as the processing devices 4 of the rear machine frame 3, the processing devices of the front machine frame 2 are capable of being driven through connection of the relevant machine part 2 to the drive gear of the tractor, in particular to a front power take-off shaft of it. According to the invention, the power can subsequently be applied to the processing devices 4 either through hydraulic lines with a hydraulic drive or through a centrally disposed gear box with right-angled transmission gear through shaft parts mounted and bearing-supported in the frame 2, 3.

Figure 3 represents schematically a front view of the transport position of the front machine part 2. Here, the intermediate frame part 13 has been swung into a substantially vertical position, a first part of the further frame part 16 extends horizontally, and the processing device 4 attached to the latter is positioned upside down. In the transport position, the outer part of the further frame part 16 has been swung vertically and the outer processing device 4 is positioned between the vertical plane through the centre line M and the intermediate frame part 13. Figure 2 also shows in the form of dashed lines an oblique interim position of the intermediate frame part 13 wherein this part can be fixed. In this position, the processing devices attached to this part have been raised from the ground, for instance, so as to adapt temporarily the working width of the machine to the circumstances in the field or to be able to turn round more smoothly at the headland.

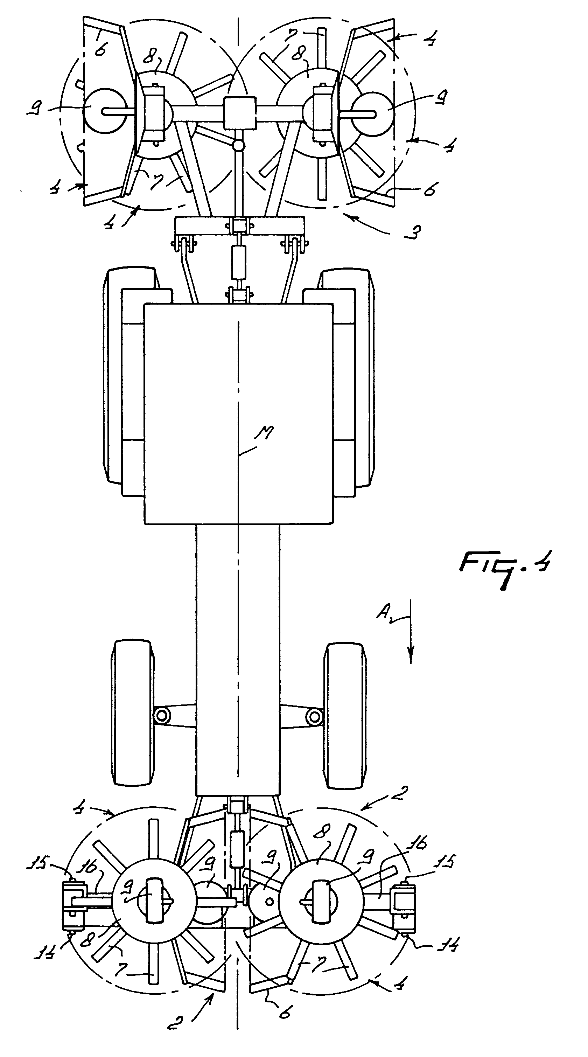

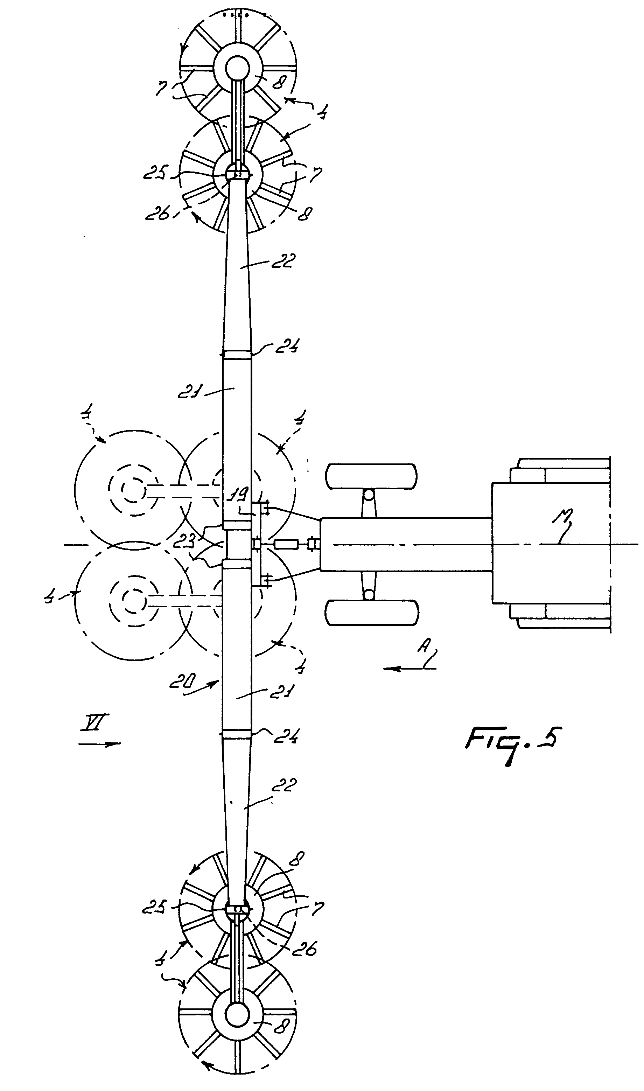

Figure 4 shows a top plan view of the entire machine in transport position. In the transport position the overall width of the machine is 2.95 m, which is less than the statutory (maximum) transport width of 3 m in many countries. The relevant frame parts of the two outermost pairs of processing devices 4 of the rear machine part 3 are at least partly extending upwards. According to the invention, the outermost part of the rear frame 3 can be either extending upwards or upwards and directed towards the vertical plane through the centre line M and, in addition, almost leaning against the other outer processing device 4, swung through 90° or more with respect to the relevant processing device in the outermost position but one.

The front machine part 2 is put into its transport position by means of control elements provided in the machine, such as hydraulic cylinders, by swivelling first the outermost frame part through 90° upwards, then swivelling the adjacent frame part on the shaft 15 also through 90°, and subsequently the intermediate frame part 13 on the shaft 14 through 90°. In the present embodiment, the processing devices each have a diameter of approximately 160 cm and overlap approximately 25 cm. As a result of this, the machine reaches a total working width of 14 m, or 11 m by disengagement of one half of the front machine part, or 8 m by disengagement of the two front machine parts.

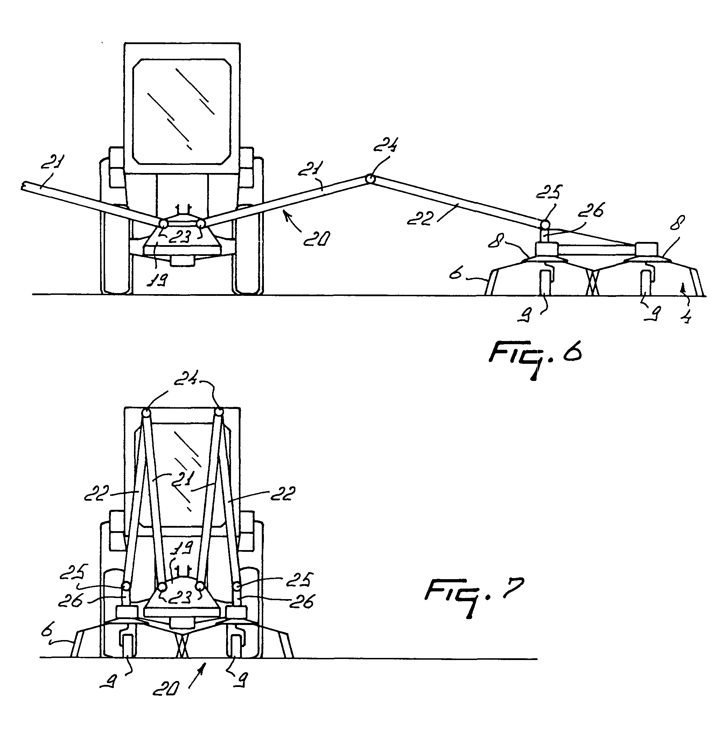

Figures 5 through 7 represent a construction according to an alternative embodiment of the invention for reaching the transport position of tedding machines having a very large width as mentioned hereinbefore. In this embodiment, the front frame part 2 of the machine includes a central frame part 19. On this part, symmetrically disposed with respect to the vertical plane through the centre line M of the machine, there are mounted by means of an arm 20 comprising two parts 21, 22 of essentially the same length which are capable of mutually hinging about a swivel shaft 24 extending in the direction of travel A, two groups of at least two processing devices 4 each, the groups being arranged at a certain distance from each other. The entire arm 20, which is oriented crosswise to the direction of travel A, is capable of pivoting about a swivel shaft 23 at least essentially oriented in the direction of travel A and bearing-supported at a small distance from the vertical plane through the centre line in the central frame part 19. The swivel shafts 23 are preferably disposed within the maximum width of a standard three-point hitch. On the outer end of a frame arm 20 there is provided, capable of pivoting on a swivel shaft 25 oriented essentially in the direction of travel A and on a swivel shaft 26 essentially directed upwards (Figure 6), a group of at least one pair of mutually cooperating (intermeshing) processing devices 4. Just as in the embodiment mentioned hereinbefore, in terms of functioning, the innermost processing device 4 of such a group links up with the outermost processing device 4 of a group belonging to the second frame 3. Capable of operating on each of the frame arms 20 and to be activated from the tractor cab is a control device, by means of which the first part 21 of the frame arm 20 can be swung upwards and the group of processing devices 4 moved in the direction of the centre line M through hinges of the second arm part on the swivel shafts 24 and 25. For this purpose, the supporting elements 9 are preferably designed as swivelling wheels in this embodiment. In the present embodiment, after unlocking the group of outermost processing devices 4 being in their position on a line transverse to the direction of travel A, the group can subsequently be swivelled on the shaft 26 through 90° in forward direction either manually or by using a control element. After such a movement around the upwards directed shaft 26 in the direction of travel A, the processing devices 4 of a group are in a row on a line in the direction of travel A. Obviously, for transport in the field such a turn is not necessary and it is sufficient to swing the frame arm 20 into upward position and to raise the front hitch of the tractor. Just as in the exemplary embodiment according to Figures 1 through 4, the maximum width for transport of the machine by public roads does not exceed the width of two processing devices whose contour circles overlap and, with that, the transport width of the machine remains less than the maximum transport width amounting to 3 m as is often laid down by law. In the present embodiment, the transport width is 2.95 m.

The invention is not limited to what is described hereinbefore, but relates to all kinds of alternatives in construction falling under the terms of the accompanying claims.

## Claims

1. A tedding machine for tedding crop lying on the ground comprising a frame equipped with around upwardly extending axes rotatably drivable processing devices having tines, said tedding machine having a frame comprising a central frame part to be coupled to a tractor, the processing devices being arranged in two groups, the processing members of each group being symmetrically disposed with respect to a centre line M in the direction of movement of the machine, **characterized in that** each group is pivotally mounted with respect to the central frame part about a first axis extending in the direction of travel A of the machine, and that each group of processing devices (4) has also a second pivot axis (26) extending upwardly with respect to the remainder of the machine and each of said groups being pivotable through 90° about said pivot axis (26) in a forward direction so as to place the processing devices (4) of each group in a row on a line in the direction of travel A and wherein for each group the first axis (25) and the upwardly extending second axis (26) are situated above the same processing device (4).

2. A tedding device according to claim 1, **characterized in that** for each group viewed into the direction of travel A the first axis (25) extending into this direction and the upwardly extending second axis (26) coincide.

3. A tedding device according to claim 1 or 2, **characterized in that** the maximum width in the transport position of two neighbouring processing devices (4) transfer to the direction of travel A does not exceed three meters.

4. A tedding machine according to one or more of the preceding claims, **characterized in that** the tedding machine has a working width of approximately 14 m.

5. A tedding machine according to one or more of the preceding claims, **characterized in that** a group of processing devices (4) is capable of being disengaged by putting a frame part (13) bearing the processing devices into an upward position.

6. A tedding machine according to one or more of the preceding claims, **characterized in that** a rotary processing device (4) has eight tine arms (7).

7. A tedding machine according to one or more of the preceding claims, **characterized in that** on at least one side of the vertical plane through the centre line M, the machine (2) comprises at least three pivots (23 - 25) oriented in the direction of travel A, with the third of them, as counted from the centre line M, being in the vicinity of the pivot shaft (26) directed essentially upwards.

8. A tedding machine according to one or more of the preceding claims, **characterized in that** the second shaft (26) directed essentially upwards is disposed within the largest contour circle of a first processing device (4), as counted from the centre line M of the machine.

9. A tedding machine according to one or more of the preceding claims, **characterized in that** if a group of processing devices (4) is swung about a second shaft directed essentially upwards, from the operating position in a forward direction, to arrive at the transport position, the first pivot axis (25) being oriented in the direction of travel being moved into a position in the vicinity of a third pivot axis (23) oriented in the direction of travel A.

10. A tedding machine according to one or more of the preceding claims, **characterized in that** the machine comprises processing devices (4), at least one of which being capable of being positioned upside down for the sake of transport.

## Patentansprüche

1. Zettwender zum Zetten von am Boden liegendem Erntegut mit einem Rahmen, der mit um aufwärts gerichtete Achsen drehbar anzutreibenden, Zinken tragenden Bearbeitungsgeräten versehen ist, wobei der Zettwender einen Rahmen hat, der einen an einen Schlepper anzuschließenden mittleren Rahmenteil umfaßt, wobei die Bearbeitungsgeräte in zwei Gruppen angeordnet sind, wobei die Bearbeitungsglieder jeder Gruppe symmetrisch relativ zu einer Längsmittelachse M in Arbeitsrichtung der Maschine angeordnet sind,
**dadurch gekennzeichnet, daß** jede Gruppe relativ zu dem mittleren Rahmenteil um eine sich in Arbeitsrichtung A der Maschine erstreckende erste Achse schwenkbar angeordnet ist, und daß jede Gruppe von Bearbeitungsgeräten (4) auch eine relativ zur übrigen Maschine aufwärts gerichtete zweite Schwenkachse (26) aufweist und jede der Gruppen um die Schwenkachse (26) um 90° nach vorn schwenkbar ist, um die Bearbeitungsgeräte (4) jeder Gruppe in einer Reihe auf einer Linie in Arbeitsrichtung A zu positionieren, und wobei bei jeder Gruppe die erste Achse (25) und die aufwärts gerichtete zweite Achse (26) über dem gleichen Bearbeitungsgerät (4) angeordnet sind.

2. Zettwender nach Anspruch 1,
**dadurch gekennzeichnet, daß** bei jeder Gruppe in Arbeitsrichtung A betrachtet die sich in diese Richtung erstreckende erste Achse (25) und die aufwärts gerichtete zweite Achse (26) zusammenfallen.

3. Zettwender nach Anspruch 1 oder 2,
**dadurch gekennzeichnet, daß** in der Transportlage die maximale Breite von zwei benachbarten Bearbeitungsgeräten (4) quer zur Arbeitsrichtung A nicht mehr als drei Meter beträgt.

4. Zettwender nach einem oder mehreren der vorhergehenden Ansprüche,
**dadurch gekennzeichnet, daß** der Zettwender eine Arbeitsbreite von etwa 14 m hat.

5. Zettwender nach einem oder mehreren der vorhergehenden Ansprüche,
**dadurch gekennzeichnet, daß** eine Gruppe von Bearbeitungsgeräten (4) dadurch zu entkoppeln ist, daß ein die Bearbeitungsgeräte tragender Rahmenteil (13) in eine aufwärts gerichtete Lage gebracht wird.

6. Zettwender nach einem oder mehreren der vorhergehenden Ansprüche,
**dadurch gekennzeichnet, daß** ein rotierendes Bearbeitungsgerät (4) acht Zinkenarme (7) aufweist.

7. Zettwender nach einem oder mehreren der vorhergehenden Ansprüche,
**dadurch gekennzeichnet, daß** auf mindestens einer Seite der vertikalen Ebene durch die Längsmittelachse M die Maschine (2) mindestens drei in Arbeitsrichtung A liegende Schwenkachsen (23 bis 25) aufweist, wobei die von der Längsmittelachse M aus dritte Schwenkachse in der Nähe der im wesentlichen aufwärts gerichteten Schwenkachse (26) liegt.

8. Zettwender nach einem oder mehreren der vorhergehenden Ansprüche,
**dadurch gekennzeichnet, daß** die im wesentlichen aufwärts gerichtete zweite Achse (26) innerhalb des größten Umlaufkreises eines von der Längsmittelachse M der Maschine aus ersten Bearbeitungsgerätes (4) angeordnet ist.

9. Zettwender nach einem oder mehreren der vorhergehenden Ansprüche,
**dadurch gekennzeichnet, daß** beim Schwenken einer Gruppe von Bearbeitungsgeräten (4) um eine im wesentlichen aufwärts gerichtete zweite Achse aus der Arbeitslage nach vorn in die Transportlage die in Arbeitsrichtung liegende erste Schwenkachse (25) in eine Position nahe einer in Arbeitsrichtung A liegenden dritten Schwenkachse (23) bewegt wird.

10. Zettwender nach einem oder mehreren der vorhergehenden Ansprüche,
**dadurch gekennzeichnet, daß** die Maschine Bearbeitungsgeräte (4) umfaßt, von denen mindestens eines zum Zwecke des Transports über Kopf zu drehen ist.

## Revendications

1. Une faneuse pour faner une récolte se trouvant sur le sol, comportant un châssis muni, de dispositifs de traitement pouvant être entraînés en rotation avec, à la périphérie, des axes s'étendant vers le haut, et ayant des dents, ladite faneuse ayant un châssis comportant une partie de châssis centrale devant être accouplée à un tracteur, les dispositifs de traitement étant agencés en deux groupes, les éléments de traitement de chaque groupe étant disposés de manière symétrique par rapport à une ligne médiane M dans la direction de déplacement de la machine, **caractérisée en ce que** chaque groupe est monté de manière pivotante par rapport à la partie de châssis centrale autour d'un premier axe s'étendant dans la direction de déplacement A de la machine, et **en ce que** chaque groupe de dispositifs de traitement (4) a également un deuxième axe de pivotement (26) s'étendant vers le haut par rapport au reste de la machine, et chacun desdits groupes pouvant pivoter sur 90° autour dudit axe de pivotement (26) dans une direction allant vers l'avant, de manière à positionner les dispositifs de traitement (4) de chaque groupe en rang sur une ligne dans la direction de déplacement A, et dans laquelle, pour chaque groupe, le premier axe (25) et le deuxième axe s'étendant vers le haut (26) sont positionnés au-dessus du même dispositif de traitement (4).

2. Une faneuse selon la revendication 1, **caractérisée en ce que** pour chaque groupe vu dans la direction de déplacement A, le premier axe (25) s'étendant dans cette direction coïncide avec le deuxième axe s'étendant vers le haut (26).

3. Une faneuse selon la revendication 1 ou 2, **caractérisée en ce que** la largeur maximum dans la position de transport de deux dispositifs de traitement voisins (4) transversalement par rapport à la position de déplacement A ne dépasse pas trois mètres.

4. Une faneuse selon l'une quelconque des revendications précédentes, **caractérisée en ce que** la faneuse a une largeur de travail d'approximativement 14 m.

5. Une faneuse selon l'une quelconque des revendications précédentes, **caractérisée en ce qu'**un groupe de dispositifs de traitement (4) peut être libéré en disposant une partie de châssis (13) tenant les dispositifs de traitement dans une position dirigée vers le haut.

6. Une faneuse selon l'une quelconque des revendications précédentes, **caractérisée en ce qu'**un dispositif de traitement rotatif (4) a huit bras à dents (7).

7. Une faneuse selon l'une quelconque des revendications précédentes, **caractérisée en ce que** sur au moins un côté du plan vertical passant par la ligne médiane M, la machine (2) comporte au moins trois pivots (23 - 25) orientés dans la direction de déplacement A, le troisième d'entre eux, en comptant à partir de la ligne médiane M, étant à proximité de l'arbre de pivotement (26) dirigé sensiblement vers le haut.

8. Une faneuse selon l'une quelconque des revendications précédentes, **caractérisée en ce que** le deuxième arbre (26) dirigé sensiblement vers le haut est disposé à l'intérieur du cercle de contour le plus grand d'un premier dispositif de traitement (4), en comptant à partir de la ligne médiane M de la machine.

9. Une faneuse selon l'une quelconque des revendications précédentes, **caractérisée en ce que** si un groupe de dispositifs de traitement (4) est basculé autour d'un deuxième arbre dirigé sensiblement vers le haut, à partir de la position de fonctionnement dans une direction allant vers l'avant, pour parvenir à la position de transport, le premier axe de pivotement (25) orienté dans la direction du déplacement est déplacé jusque dans une position située à proximité d'un troisième axe de pivotement (23) orienté dans la direction du déplacement A.

10. Une faneuse selon l'une quelconque des revendications précédentes, **caractérisée en ce que** la machine comporte des dispositifs de traitement (4), dont au moins un peut être positionné à l'envers en vue du transport.
